## Europäisches Patentamt
## European Patent Office
## Office européen des brevets

(11) Publication number: **0 047 341**
**B1**

(12) **EUROPEAN PATENT SPECIFICATION**

(45) Date of publication of patent specification: **02.05.85**

(51) Int. Cl.⁴: **H 01 B 13/30, H 01 B 7/28**

(21) Application number: **80200801.1**

(22) Date of filing: **26.08.80**

(54) **Arrangement and method for making a fluid-tight cable.**

(43) Date of publication of application:
**17.03.82 Bulletin 82/11**

(45) Publication of the grant of the patent:
**02.05.85 Bulletin 85/18**

(84) Designated Contracting States:
**AT CH DE FR GB LI NL SE**

(56) References cited:
**DE-A-2 016 993**
**DE-A-2 742 771**
**GB-A-1 099 940**

(73) Proprietor: **BELL TELEPHONE MANUFACTURING COMPANY Naamloze Vennootschap**
**Francis Wellesplein 1**
**B-2000 Antwerp (BE)**
(84) **NL**

(73) Proprietor: **International Standard Electric Corporation**
**320 Park Avenue**
**New York New York 10022 (US)**
(84) **CH DE FR GB LI SE AT**

(72) Inventor: **Devoldere, Johan A. B. G.**
**Poelstraat 215**
**B-9220 Merelbeke (BE)**
Inventor: **De Coninck, Johan A.C.**
**Vesten 63**
**B-9500 Geraardsbergen (BE)**

(74) Representative: **Vermeersch, Robert et al**
**BELL TELEPHONE MANUFACTURING COMPANY Naamloze Vennootschap Patent Department Francis Wellesplein 1**
**B-2000 Antwerp (BE)**

Courier Press, Leamington Spa, England.

## Description

The present invention relates to an arrangement for making a fluid-tight, e.g. water-tight, cable containing a cable core with a plurality of conductors by filling interstices between said conductors with a fluid blocking, e.g. water blocking, material to prevent fluid, e.g. water, penetration, said arrangement including an injection device to inject said material into said cable core in discrete amounts and means to displace a portion of said injection device in such a way that they produce substantially no relative movement between said cable core and said portion during a first part of an injection cycle but allow such a relative movement during the second part of said cycle.

Such an arrangement is already known from the German Offenlegungsschrift DE—A— 2742771. Therein the injection device comprises a stationary portion and a displaceable portion which is constituted by telescopic tubes. This means that this injection device is of a relatively complicated structure and that correspondingly complex means are apparently required for the displacement of these tubes. Moreover, the sliding surfaces of these tubes will rapidly become stuck by the fluid blocking material.

An object of the present invention is to provide an arrangement of the above type but which does not present such drawbacks.

According to the invention this object is achieved due to the fact that said displacement means displace the whole injection device.

Thus this injection device has no parts which are displaceable with respect to each other by the displacement means so that it is of a relatively simple structure and that no sticking effect such as mentioned above can occur. As a consequence, also these displacement means can be relatively simple.

The above mentioned and other objects and features of the invention will become more apparent and the invention itself will be best understood by referring to the following description of an embodiment taken in conjunction with the accompanying drawings in which:

Fig. 1 is a schematic representation of part of a cable extrusion line including a water blocking injection unit comprising a water blocking injection arrangement 2 used to inject water blocking material into a cable in order to provide the latter with water blocking elements according to the invention;

Fig. 2 is a front view of the water blocking injection arrangement 2 with an injection device 21 forming part of the injection unit of Fig. 1;

Fig. 3 is a side view of the injection arrangement of Fig. 2;

Fig. 4 is a side view of the injection device 21;

Fig. 5 is a longitudinal cross section along line AA of the injection device shown in side view in Fig. 4;

Fig. 6 shows different positions of the injection device 21 during and after the injection of the water blocking material and synchronizing pulses SI used to synchronize the operations of the injection unit;

Fig. 7 is a part of a pneumatic control system used to control the operations of the injection arrangement;

Fig. 8 is another part of the pneumatic control system used to control the injection of water blocking material;

Fig. 9 is a longitudinal cross section of a cable provided with water blocking elements realized by means of the injection arrangement;

Fig. 10 is an enlarged part of a transverse cross section alone line AA of Fig. 9.

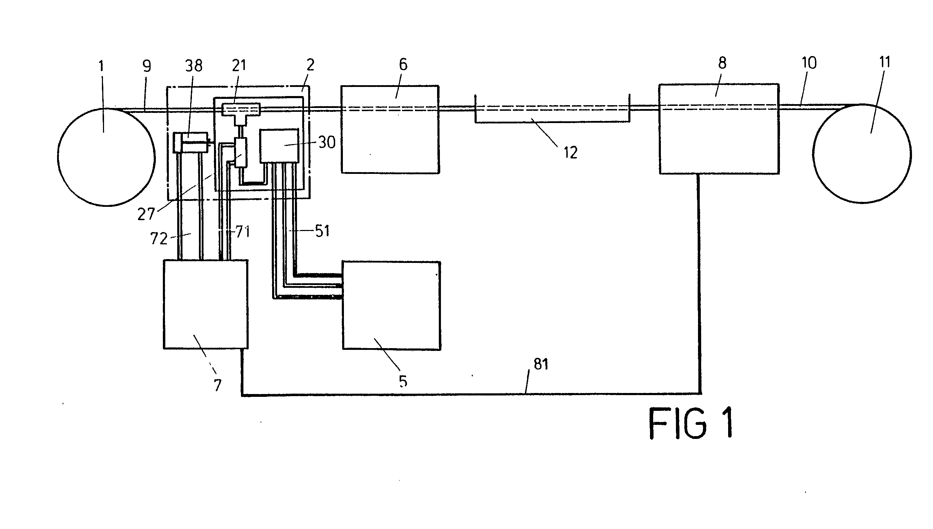

Before describing the arrangement and device shown in the figures it is reminded that a cable including a plurality of insulated electric conductors or optical fibres for instance may be rendered immune to longitudinal water penetration by injecting water blocking material into the cable core either in a continuous or discrete way. In the last case regularly spaced water blocking elements acting as water stops are produced. In what follows water blocking elements will be called water stops for short. A way to obtain such water stops is to fill the free spaces between the insulated conductors and those between the conductors near the inner sheath and this sheath with water blocking material. Such water stops are realized by means of the water blocking injection unit to be described below and which forms part of the extrusion line shown on Fig. 1. The water blocking injection unit includes an injection arrangement 2 to be described later, a liquid metering system 5 to dose different ingredients to be mixed and to be injected into a cable core in order to form water stops and a control system 7 to control the operation of the injection arrangement 2. The liquid metering system 5 is available on the market. The system used in this embodiment is the model 100 mm variable ratio type from Liquid Control (Northants, England) and is able to mix predetermined quantities of liquid ingredients used and to supply this mixture to the injection arrangement at the required pressure. The liquid metering system mainly includes three vessels, a first one containing an uncured polyurethane co-polymer consisting of an hydroxy-terminated polybutadiene, a second one containing a diphenylmethane diisocyanate and a third one containing a 2-ethylhexane diol serving as a chain extender and water. The liquid metering system supplies predetermined quantities of the above mentioned liquids to a rotary mixer at a required pessure. In order to shorten the length of the conduct from the mixer to the injection arrangement the mixer has been mounted in the injection arrangement and is connected to the liquid dosing system via three flexible conducts shown schematically (Fig. 1) by 51. On Fig. 1 are shown the main parts of the injection arrangement. These parts are T-shaped injection device 21, a valve 27, a mixer 30 to mix the predetermined liquid quantities and a cylinder 38 with double acting piston to impart a reciprocating movement to the main parts as explained later. The control system 7 is connected to pneumatic valve 27 and cylinder 38 by means of control conduits 71 and 72 respectively.

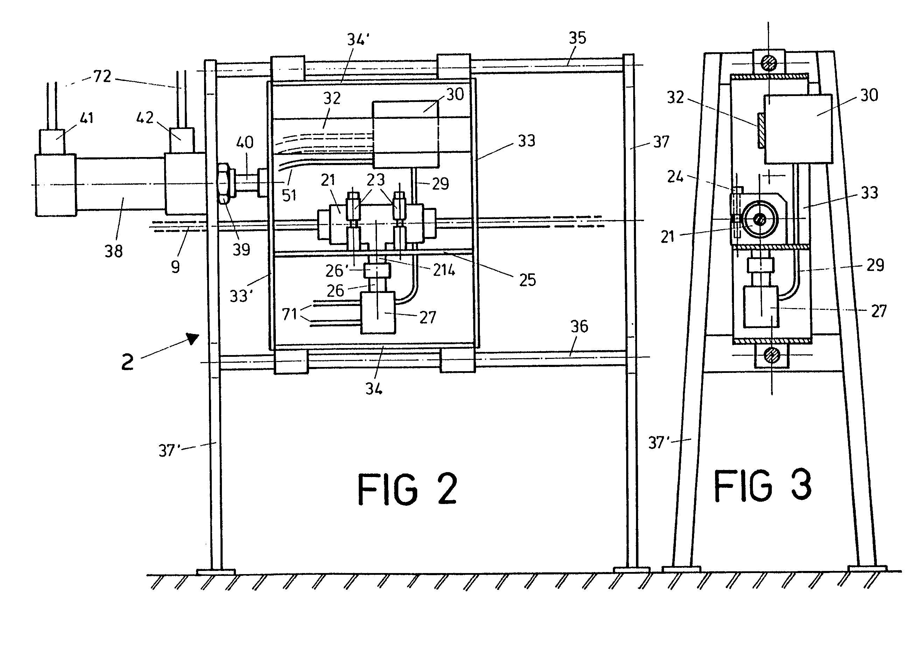

The above extrusion line further includes a pay-off reel 1 supplying a wrapped cable core 9 to the injection arrangement 2, a sheath extruder 6 to cover the injected cable with a polyethylene sheath, a cooling trough 12 to cool the extruded cable, a cable puller 8 to pull the sheathed cable and a take-up reel 11. The cable core which may be for instance built up of 25 quads is held together by means of a helically wound non woven permeable polyester tape. The liquid mixture is injected into the cable through this permeable tape as explained below. This tape is known on the market as "Reemay tape" No. 2014 from Du Pont de Nemours. The polyethylene sheath extruder 6 and cable puller 8 are machines known in the art of cable extrusion techniques so that they do not need to be described. The cable puller 8 is provided with a synchronizing system supplying a synchronizing pulse to the control system 7 via electrical connection 81 for every predetermined length (e.g. 2 meters) of extruded cable in order to synchronize the injection arrangement 2 with the extruder 6. The synchronizing system simply consists of a cam system and switch mounted on drive shaft of the cable puller and a time delay circuit to produce periodic pulses of a predetermined time interval. Upon the occurrence of such a synchronizing pulse valve 27 is opened during the predetermined time interval to allow liquid mixture or material from the mixer 30 to the injection device 21 through which the cable passes. This device travels with the cable during the injection time interval. Then the device 21 returns to its initial position in a direction opposite to the direction of the cable movement until the occurrence of the next synchronising pulse. In this way a stop of a predetermined length is injected into the cable, e.g. every two meters. The detailed explanation of the movement of the injection device and of the injection mechanism which is shown in Figs. 2 and 3 will follow below. It should be noted that as mentioned before the mixture is injected through the permeable helically wound tape. After the injection of the water blocking material an inner polyethylene sheath is extruded and this partly finished cable is wound on the take-up reel. Afterwards an aluminium polyethylene laminate moisture barrier is folded around the sheathed cable (not shown) and an outer polyethylene sheath is extruded thereon (also not shown). Subsequently, the thus obtained cable may be armoured.

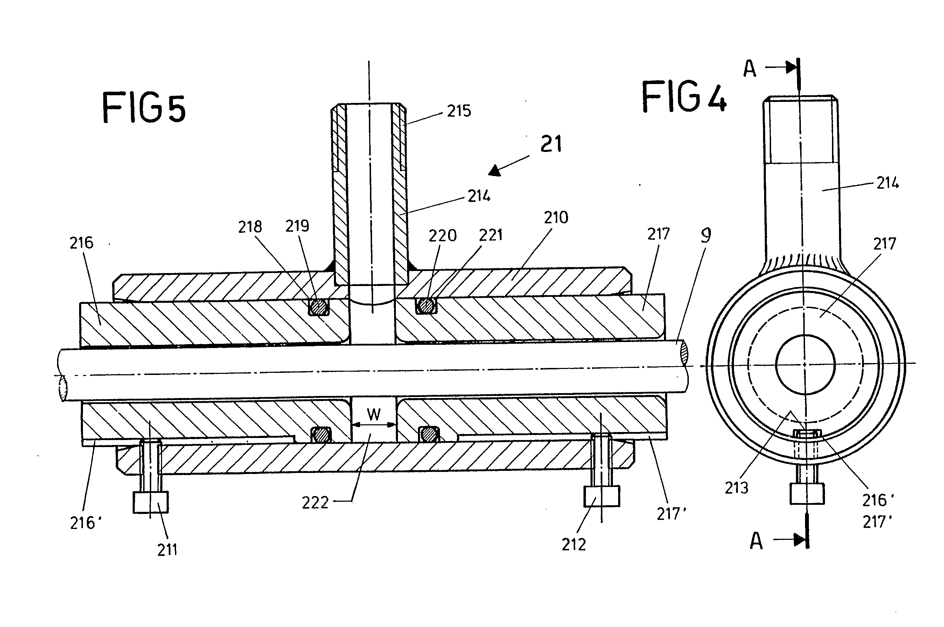

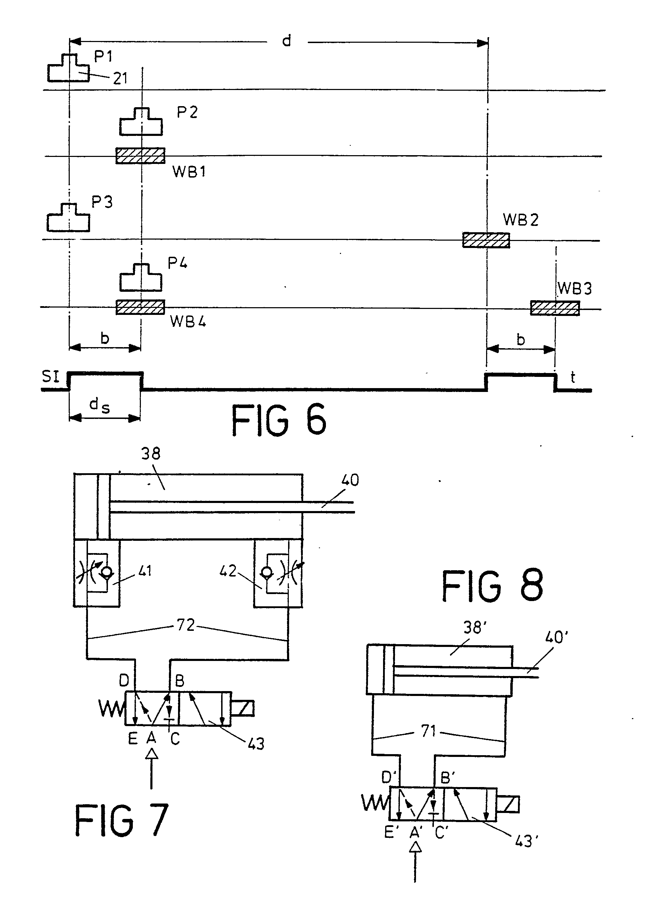

Referring to Figs. 2 and 3 the injection arrangement 2 shown thereon mainly includes the already mentioned injection device 21, the valve 27 and mixer 30. The injection device 21 is fixed on bar 25 by means of clamping member 23. These members tightly clamp the device 21 by means of bolts such as 24 (Fig. 3). The clamping members are adjustably mounted (not shown) on bar 25 for reasons which will become clear later. The bar 25 is welded to vertical bars 33 and 33' of an inner frame also including horizontal bars 34 and 34'. By means not shown the mixer 30 is fixed to bar 32 which is also welded to vertical bars 33 and 33' of the inner frame. This inner frame is guided by means of guiding rods 35 and 36 rigidly connecting uprights 37 and 37' of a fixed outer frame including these uprights and guiding rods 35 and 36. The uprights of the outer frame are rigidly fixed to the floor. Fig. 3 shows a side view of the arrangement 2 with the vertical bar 33 of the inner frame and the upright 37 of the outer frame removed. A reciprocating movement is imparted to the inner frame by means of a double acting piston 40 of cylinder 38 fixed to the upright 37' of the outer frame by means of nut 39. The air pressure moving the reciprocating piston is admitted via the flowcontrol valves 41 and 42 connected to the control system 7 via flexible conducts 72. The system used is that schematically shown on Fig. 7. The valve 43 which forms part of the control system 7 is controlled by the synchronizing pulses as explained later. The cylinder with reciprocating piston, valve 43 and flow control valves 41 and 42 are standard piece parts available on the market. The valve 43 has 5 ports A B C D E and 2 positions. In its rest position the ports A and B, D and E are interconnected (connections drawn in full lines). In the actuated state ports A and D, B and C are interconnected (connections drawn in dashed lines). The flow control valves each include a parallel connection of a restrictor to regulate the air flow and a non return valve allowing the air only to flow from the valve 43 to the cylinder 38. The above mentioned three ingredients are each fed via a different flexible conduct 51 to the mixer 30 and the mixture is supplied to the injection device via conducts 29 and 26 and pneumatically operated valve 27 (Fig. 2). Conduct 26 is connected to injection tube 214 (Fig. 4) of injection device 21 by means of coupling 26'. Valve 27 is an on-off valve operated by a double acting piston 40' of a cylinder 38' mounted on the valve. The pneumatic system used is schematically shown on Fig. 8. The cylinder with double acting piston is itself connected (via conducts 71) to a 5 port, two positions valve 43' similar to valve 43. This valve forms part of the control system and is connected to the cylinder 38' in a way similar to that shown on Fig. 7 except for the flow control valves which are not used.

Referring to Figs. 4 and 5 the injection device shown thereon includes nylon tubes 216 and 217 adjustable within a housing 210 so as to delimit a chamber 222 with adjustable width W. The adjustable tubes 216 and 217 are provided with longitudinal grooves 216' and 217' wherein the top ends of the screws 211 and 212 are located respectively. These screws are used to fix the adjustable tubes in the housing. The housing 210 is further provided with an injection tube 214 having a threaded end 215 to screw on the coupling 26' (Fig. 2). To prevent mixed liquid from penetrating between the contact surfaces of the housing and the tubes 216 and 217 the latter are provided with circular grooves 218 and 221 wherein sealing rings 219 and 220 are located respectively.

The operation of the injection arrangement will now be explained, reference being made to Figs. 2, 3, 4, 5, 6, 7 and 8. In the rest position ports A and B, D and E of valve 43 (Fig. 7) and ports A′ and B′, D′ and E′ of valve 43′ (Fig. 8) are interconnected. Consequently, when pressurized air is admitted both pistons 40 and 40′ move to the left. The latter piston closes valve 27. Since the return valve of flow control valve 42 allows the air to flow from valve 43 to cylinder 38 piston 40 moves to the left in a controlled way since the air in the left cylinder part is exhausted via the restrictor of valve 41, the non return valve of this flow control valve being blocked. Piston 40 moves the inner frame with the injection device 21, mixer 30 and valve 27 to the left until it reaches its rest position which is indicated as P1 in Fig. 6. A cable core is now pulled through the injection device and the extruder but before starting the water blocking operation and subsequent extrusion a few preparatory operations such as core tube centering for instance have to be carried out. To prevent blocking material present on the outer cable core surface due to the blocking operation from contaminating and obstructing the core tube of the extrusion tool of the polyethylene extruder, a core tube is used having an inner diameter which is larger than the cable core diameter and a so called tube extrusion is carried out. In order to obtain a constant polyethylene sheath thickness it is then necessary to first center the cable core with respect to the core tube and then to extrude a few meters and to check the sheath thickness. To carry out this centering the injection device is therefore positioned correctly by means of the adjustable clamping members.

At the occurrence of a synchronising pulse SI (Fig. 6) valve 43 of the pneumatic system moving the inner frame and valve 43′ controlling the operation of valve 27 are actuated and remain actuated during the time interval ds (Fig. 6). Pressurized air is admitted to cylinder 38 moving the inner frame and to the cylinder 38′ moving valve 27 admitting liquid mixture from the mixer. Pressurized air is admitted to cylinder 38 via interconnected ports A and D of valve 43 and the opened non return valve of flow control valve 41. The air is exhausted via the restrictor of flow control valve 42 (Fig. 7). The restrictor of flow control valve 42 is adjusted in such a way that the movement of piston 40 to the right takes place at a speed equal to that of the cable extrusion. Consequently, during the time interval ds the inner frame with the injection device moves to the right at the extrusion speed and liquid mixture is injected into the cable core to form a water stop. As mentioned earlier this liquid mixture is injected through the permeable non woven polyester tape wound around the wires of the cable core.

At the end of time interval ds the injection device is in position P2 (Fig. 6), valves 43 and 43′ return to their rest positions so that the injection of liquid mixture is stopped and the movement of the inner frame is reversed since pressurized air is now admitted via interconnected ports A′ and B′ (Fig. 8) and via interconnected ports A and B and flow control valve 42 (Fig. 7). The air in the left part of cylinder 38 is exhausted via flow control valve 41 which is adjusted in such a way that the inner frame with injection device 21 returns to its rest position P3 (=P1) in a time interval necessary for the block WB1 completely formed in position P2 to travel the distance d—b (water stop in WB2), d being the distance of the water stops in the cable. At the occurrence of a following synchronisation pulse the above mentioned cycle is repeated, i.e. the injection device moves from position P3 to P4 while the injection takes place and the already formed water stop WB2 moves to position WB3. In position P4 of the injection device a new complete water block WB4 is formed, the distance between two succeeding stops WB4 and WB3 being necessarily equal to d.

It should be noted that during the return movement of the injection device the liquid mixture contained in the chamber 222 (Fig. 4) is smeared out over the permeable tape holding the wires of the cable core together. Therefore, the chamber must contain a volume of liquid mixture sufficiently large to be smeared out over the tape between two succeeding stops. Since on the other hand the stop length is also determined by the chamber width, the choice of this width is conditioned by these two factors, i.e. the stop length and the chamber volume. The heat of the immediately following extrusion of the inner polyethylene sheath accelerates the foaming of and curing of the injected liquid mixture and part of the smeared mixture impregnates the tape. The remaining part forms a supplementary sheath between the tape and the polyethylene sheath. As mentioned in the introductory part this decreases the capacitive earth coupling with the outer layer of the wires of the cable core. Also, a lubricating effect is obtained during the return movement of the injection device, it being remarked that since the inner diameter of this device is equal to the enveloped cable core diameter is is difficult to move the cable core with respect to the device in dry condition.

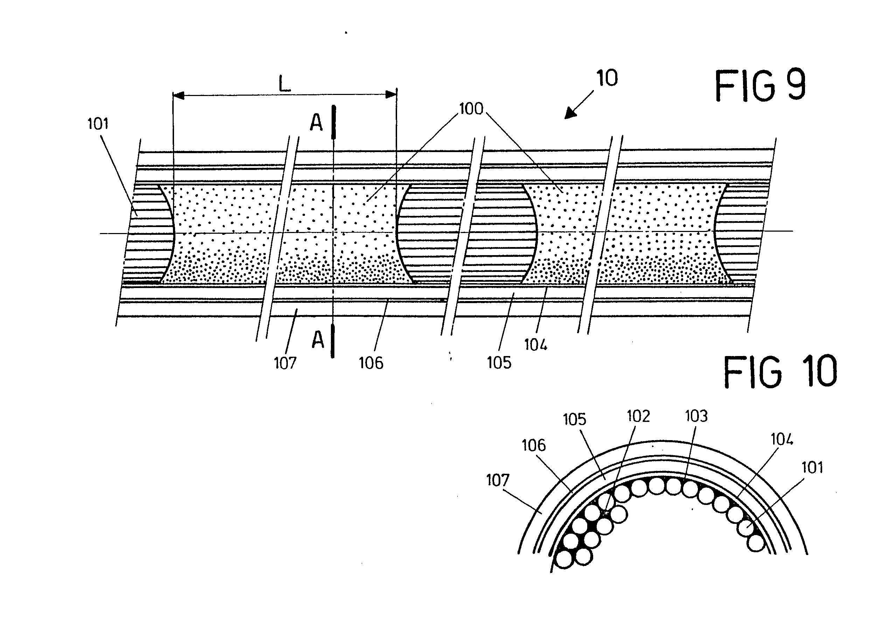

Referring to Fig. 9 the cable 10, e.g. a 25 quad cable, shown in a longitudinal cross section thereon is provided with water stops such as 100 made in the above described way. These stops are limited on both sides by substantially concave surfaces which are separated by a minimum distance L. This distance is called the length of the stop.

As shown on Fig. 10 which is an enlarged part of a cross section along line AA of Fig. 9, the interstices 102 and 103 between the stranded wires 101 and between the wires 101 and the permeable polyester tape 104 respectively are filled with the above mentioned blocking mixture. The tape itself is impregnated as explained earlier. The cable further has an inner polyethylene sheath 105 extruded over the impregnated tape, an aluminium polyethylene moisture barrier 106 folded around the inner sheath and an outer polyethylene sheath 107 extruded on the outer sheath.

In a typical example a cable core containing 25 quads held together by means of an helically wound non woven polyester tape and extruded at a speed of 1080 meters per hour is provided with water stops made by means of the above described arrangement. The water stops have a length substantially equal to 10 centimeters and the distance between stops is 2 meters with an allowable tolerance of 10%. The chamber width is 4 centimeters and the liquid mixture is injected during 1 second at a pressure of 8 atmospheres.

It should be remarked that instead of extruding an inner polyethylene sheath the cable core already provided with water stops and an impregnated tape as explained above could be enveloped in a second permeable tape which may then be impregnated with the above mixture and cured.

Also, instead of folding the aluminium polyethylene moisture barrier directly around the sheathed cable supplementary water blocking material can be provided between the inner sheath and the moisture barrier either in a continuous or discrete way.

A way to provide such a supplementary barrier is to simply permit blocking material to drip onto the sheathed cable prior to the aluminium polyethylene moisture barrier folding operation.

While the principles of the invention have been described above in connection with specific apparatus, it is to be clearly understood that this description is made only by way of example with the claims defining the scope of the invention.

## Claims

1. Arrangement for making a fluid-tight, e.g. water-tight, cable containing a cable core (9) with a plurality of conductors by filling interstices between said conductors with a fluid blocking, e.g. water blocking, material to prevent fluid, e.g. water, penetration, said arrangement including an injection device (21) to inject said material into said cable core in discrete amounts and means to displace a portion of said injection device in such a way that they produce substantially no relative movement between said cable core and said portion during a first part of an injection cycle but allow such a relative movement during the second part of said cycle, characterized in that said displacement means displace the whole injection device (21).

2. Arrangement according to claim 1, characterized in that said means impart to said injection device (21) a reciprocating movement, said injection of said blocking material occurring during one of the two strokes of said reciprocating movement.

3. Arrangement according to claim 2, characterized in that said means comprise a displaceable frame (25, 33, 33'; 34, 34') whereon said injection device (21) is mounted and pneumatic means (38, 40) to impart to said displaceable frame said reciprocating movement, said displaceable frame being able to slide on guiding rods (35, 36) forming part of a stationary frame (37, 37').

4. Arrangement according to claim 3, characterized in that on said displaceable frame are mounted a mixer (30) to mix the components of said material and a valve (27) to admit said mixture to said injection device.

5. Method for making a fluid-tight, e.g. water-tight, cable containing a cable core (9) with a plurality of conductors including the steps of injecting fluid blocking material into said core with an injection device (21) and in a discontinuous way in order to obtain discrete fluid blocks and of moving a portion of said injection device with said cable core during said injection and in an opposite direction when said injection is stopped, characterized in that said method includes the step of applying a number of sheaths (104) on said cable core and that the discontinuous injection step comprises moving the whole injection device (210—222) with said cable core during said injection and in said opposite direction when said injection is stopped.

6. Method according to claim 5, characterized in that said cable core is wrapped in at least one layer of permeable tape, said material is injected in said cable core through said permeable tape during said injection step and that said material is smeared out over said permeable tape during said movement in said opposite direction.

7. Method according to claim 6, characterized in that part of said material impregnates said permeable tape, and said injected material expands due to the heat of succeeding sheathing, e.g. polyethylene sheathing, operations.

8. Method according to claim 6, characterized in that said fluid blocking material layer is applied onto an impermeable sheath (105), e.g. a polyethylene sheath, extruded on said cable core whereafter a moisture barrier (106), e.g. aluminium polyethylene, is folded around the thus sheathed core.

9. Method according to claim 8, characterized in that fluid blocking material is allowed to drip onto said sheath (105) before the application of said moisture barrier (106).

## Patentansprüche

1. Vorrichtung zur Herstellung eines flüssigkeitsdichten, z.B. wasserdichten Kabels, das eine Kabelseele (9) mit einer Vielzahl von Adern enthält, wobei die Hohlräume zwischen den Adern mit einem flüssigkeitsblockierenden Material ausgefüllt werden, um das Eindringen von Flüssigkeit, z.B. Wasser, zu verhindern, wobei die Vorrichtung ein Einspritzgerät (21) zur Einspritzung vorgegebener Mengen des Materials in die Kabelseele enthält, sowie Mittel zum Verschieben eines Teils des Einspritzgerätes in der Weise, daß sie im wesentlichen keine Relativbewegung zwischen der Kabelseele und dem Geräteteil in einem ersten Schritt eines Einspritzvorganges bewirken, wohl aber eine solche Relativbewegung in dem zweiten Schritt dieses Vorgangs zulassen, dadurch gekennzeichnet, daß die Verschiebemittel das gesamte Einspritzgerät (21) verschieben.

2. Vorrichtung nach Anspruch 1, dadurch gekennzeichnet, daß die Mittel das Einspritzgerät (21) hin- und herbewegen, wobei das blockierende Material während einer von zwei Hüben der Hin- und Herbewegung eingespritzt wird.

3. Vorrichtung nach Anspruch 2, dadurch gekennzeichnet, daß die Mittel einen verschiebbaren Rahmen (25, 33, 33'; 34, 34') aufweisen, auf welchem das Einspritzgerät (21) montiert ist, sowie pneumatische Mittel (38, 40), die den verschiebbaren Rahmen hin- und herbewegen, wobei der verschiebbare Rahmen auf Führungsstäben (35, 36) gleitet, die Teil eines feststehenden Rahmens (37, 37') bilden.

4. Vorrichtung nach Anspruch 3, dadurch gekennzeichnet, daß auf dem verschiebbaren Rahmen ein Mischer (30) befestigt ist, um die Bestandteile des Materials zu mischen, und ein Ventil (27), um die Mischung dem Einspritzgerät zuzuführen.

5. Verfahren zur Herstellung eines flüssigkeitsdichten, z.B. wasserdichten Kabels, das eine Kabelseele (9) und eine Vielzahl von Adern enthält, wobei zu dem Verfahren die folgenden Schritte gehören:

— Einspritzen eines flüssigkeitsblockierenden Materials in die Kabelseele mittels eines Einspritzgerätes (21) und in einer nicht kontinuierlichen Weise, um diskrete Flüssigkeitsbarrieren zu erhalten, und

— Bewegen eines Teils des Einspritzgerätes zusammen mit der Kabelseele während des Einspritzvorgangs, und in entgegengesetzter Richtung wenn der Einspritzvorgang gestoppt wird, dadurch gekennzeichnet, daß das Verfahren einen Schritt enthält, in der die Kabelseele mit einer Anzahl Mäntel (104) versehen wird, und daß in der nicht kontinuierlichen Einspritzstufe das gesamte Einspritzgerät (210—222) zusammen mit der Kabelseele während des Einspritzens bewegt wird, und in entgegengesetzter Richtung wenn der Einspritzvorgang gestoppt wird.

6. Verfahren nach Anspruch 5, dadurch gekennzeichnet, daß die Kabelseele mit wenigstens einer Lage eines durchlässigen Bandes umwickelt wird, daß das Material in die Kabelseele durch das durchlässige Band hindurch während der Einspritzstufe eingespritzt wird, und daß das Material während der Bewegung in der entgegengesetzten Richtung über dem durchlässigen Band verschmiert wird.

7. Verfahren nach Anspruch 6, dadurch gekennzeichnet, daß ein Teil des Materials das durchlässige Band imprägniert, und sich das eingespritzte Material aufgrund der durch die nachfolgenden Ummantelungsvorgänge, z.B. Poly- äthylenummantelung, erzeugten Wärme ausdehnt.

8. Verfahren nach Anspruch 6, dadurch gekennzeichnet, daß die flüssigkeitsblockierende Materialschicht auf einen undurchlässigen Mantel (105), z.B. einen Polyäthylenmantel, aufgetragen und auf der Kabelseele extrudiert wird, und daß anschließend eine Feuchtigkeitsbarriere (106), z.B. aus Aluminiumpolyäthylen, um die so ummantelte Kabelseele gefaltet wird.

9. Verfahren nach Anspruch 8, dadurch gekennzeichnet, daß das flüssigkeitsblockierende Material vor der Aufbringung der Feuchtigkeitsbarriere (106) auf den Mantel (105) tropft.

**Revendications**

1. Agencement pour fabriquer un câble étanche aux fluides, par exemple étanche à l'eau, contenant une âme (9) composée de plusieurs conducteurs, en remplissant les interstices entre lesdits conducteurs d'un matériau de blocage de fluides, comme par exemple un matériau hydrofuge, destinés à empêcher les fluides, comme par exemple l'eau, de pénétrer, ledit arrangement comprenant un dispositif d'injection (21) pour injecter ledit matériau dans ladite âme du câble par volumes séparés et des moyens pour déplacer une partie dudit dispositif d'injection de telle manière qu'il ne se produise pratiquement pas de mouvements relatifs entre ladite âme du câble et ladite partie du dispositif pendant une première partie d'un cycle d'injection, mais qu'un tel mouvement relatif soit autorisé pendant la deuxième partie dudit cycle, caractérisé en ce que lesdits moyens de déplacements déplacent l'ensemble du dispositif d'injection (21).

2. Agencement conforme à la revendication 1, caractérisé en ce que lesdits moyens impriment audit dispositif d'injection (21) un mouvement alternatif, ladite injection dudit matériau hydrofuge se produisant pendant l'une des deux courses dudit mouvement alternatif.

3. Agencement conformément à la revendication 2, caractérisé en ce que lesdits moyens comprennent un châssis mobile (25, 33, 33', 34, 34') où ledit dispositif d'injection (21) est monté, et des moyens pneumatiques (38, 40) pour imprimer audit châssis mobile ledit mouvement alternatif, ledit châssis mobile étant capable de glisser sur des tiges de guidage (35, 36) formant partie d'un châssis fixe (37, 37').

4. Agencement conformément à la revendication 3, caractérisé en ce que sont montés sur ledit châssis mobile un mélangeur (30) pour mélanger les ingrédients dudit matériau et une soupape (27) pour admettre ledit mélange dans ledit dispositif d'injection.

5. Méthode de fabrication d'un câble étanche aux fluides, par exemple, étanche à l'eau, composé d'une âme (9) et de plusieurs conducteurs, comprenant les opérations d'injection d'un matériau de blocage de fluides dans ladite âme par un dispositif d'injection (21), par intermittence, afin d'obtenir des blocs de matériau distincts, et de déplacement d'une partie dudit dispositif d'injection avec ladite âme du câble, pendant ladite injection et dans le sens opposé lorsque ladite injection est arrêtée, caractérisée en ce que ladite méthode comprend l'opération d'application d'un certain nombre de gaines (104) sur ladite âme du câble et en ce que l'opération d'injection discontinue comprend le déplacement de l'ensemble du dispositif d'injection (210—222) avec ladite âme du câble, pendant ladite injection, et dans la direction opposée lorsque ladite injection est arrêtée.

6. Méthode conforme à la revendication 5, caractérisée en ce que ladite âme du câble est enveloppée dans au moins une couche de ruban perméable, ledit matériau est injecté dans ladite âme du câble à travers ledit ruban perméable pendant ladite opération d'injection et que ledit matériau est étalé sur ledit ruban perméable pendant ledit déplacement dans ladite direction opposée.

7. Méthode conformément à la revendication 6, caractérisée en ce qu'une partie dudit matériau imprègne ledit ruban perméable et que ledit matériau injecté se dilate sous l'effet de la chaleur des opérations successives de gainage (par exemple, gaine en polyéthylène).

8. Méthode conformément à la revendication 6, caractérisée en ce que ladite couche de matériau de blocage de fluides est appliquée sur une gaine imperméable (105), comme par exemple une gaine en polyéthylène, extrudée sur ladite âme du câble, après quoi une feuille faisant obstacle à l'humidité (106), comme par exemple de l'aluminium-polyéthylène, est pliée autour de l'âme ainsi gainée.

9. Méthode conformément à la revendication 8, caractérisée en ce que ledit matériau de blocage de fluides est autorisé à s'égoutter sur ladite gaine (105) avant l'application de la feuille faisant obstacle à l'humidité (106).

FIG 1

FIG 2

FIG 3

0 047 341

FIG5

FIG4

215

21

214

216  218  219  220 221  210  217  9

214

217

W

213  216'
217'

216'

211  222  212  217'

A

A

3

0 047 341

FIG 6

FIG 8

FIG 7

FIG 9

FIG 10

0 047 341